# EUROPÄISCHE PATENTSCHRIFT

(11) **EP 2 611 599 B1**
(45) Veröffentlichungstag und Bekanntmachung des Hinweises auf die Patenterteilung: **11.11.2015**
(21) Anmeldenummer: 11741125.6
(22) Anmeldetag: 05.08.2011
(51) Int. Cl.: B29C 70/60, B29B 17/00, E04F 15/18, E04F 15/22, E04F 15/02, E04F 15/10, B29D 99/00, B32B 5/16, B32B 25/14, B32B 25/04, B29L 31/00, B29L 31/30, B29K 75/00

(54) **BODENBELAG UND VERFAHREN ZUR HERSTELLUNG DES SELBEN**
FLOOR COVERING AND METHOD FOR PRODUCING THE SAME
REVÊTEMENT DE SOL ET PROCÉDÉ DE FABRICATION CORRESPONDANT

(30) Priorität: 01.09.2010 DE 102010036120
(43) Veröffentlichungstag der Anmeldung: 10.07.2013
(73) Patentinhaber: Nora Systems GmbH, 69469 Weinheim (DE)
(72) Erfinder: GRUN, Gregor, 66482 Zweibrücken (DE); KRÖGER, Mario, 76646 Bruchsal (DE)
(74) Vertreter: Reiser & Partner
(86) Internationale Anmeldenummer: PCT/EP2011/003936
(87) Internationale Veröffentlichungsnummer: WO 2012/028239

(56) Entgegenhaltungen:
- WO-A2-2007/008442
- JP-A- 2001 074 259
- NL-C2- 1 012 882
- US-A1- 2007 137 139

## Beschreibung

Die Erfindung betrifft einen Bodenbelag und ein Verfahren zur Herstellung des selben.

Moderne Bürogebäude weisen häufig große Glasflächen auf, welche einen hohen Eintrag an Sonnenwärme ermöglichen. Insbesondere in den Sommermonaten können sich derartige Bürogebäude allerdings sehr stark aufheizen. Um den Einsatz von Klimaanlagen zu reduzieren und den Temperaturverlauf zu vergleichmäßigen ist es bekannt, Wände, insbesondere Innenwände eines Gebäudes mit einem Latentwärmespeicher auszurüsten. Dieser Latentwärmespeicher ist in der Lage, Wärmeenergie aus der Umgebung zu absorbieren, ohne dass sich die Temperatur des Latentwärmespeichers ändert. Dies kann durch Einsatz eines Phasenwechselmaterials erreicht werden, welches in normalen Umgebungstemperaturen einen Phasenübergang zwischen fest und flüssig aufweist. Durch den Phasenübergang wird während des Verflüssigens Wärmeenergie aufgenommen, wohingegen während des Erstarrens Wärmeenergie abgegeben wird. Dadurch kann ein Latentwärmespeicher während des Tages bei hoher Sonneneinstrahlung durch das Verflüssigen des Latentwärmespeichers Wärmeenergie aufnehmen und während der Nacht durch das Erstarren des Latentwärmespeichers wieder an die Umgebung abgeben. Dadurch ergibt sich ein vergleichmäßigter Temperaturverlauf innerhalb des Gebäudes, so dass der Leistungsbedarf von Klimaanlagen verringert ist. Allerdings eignet sich ein in den Wänden vorgesehener Latentwärmespeicher vorwiegend zur Montage in einen Rohbau, wohingegen die Nachrüstung in ein bestehendes und bereits benutztes Gebäude schwierig ist.

US 2007/0127139 A1 offenbart einen Bodenbelag gemäß dem Oberbegriff des Anspruchs 1 und ein Verfahren zur Herstellung des selben.

In der NL 1012882 ist die Herstellung eines Sportbodenbelags beschrieben, welcher in einer Lage granuliertes Polyurethan enthält.

Der Erfindung liegt die Aufgabe zugrunde, ein System zur Ausrüstung von Gebäuden oder Gebäudebestandteilen mit einem Latentwärmespeicher bereitzustellen, welches sich zur Nachrüstung in bestehende Gebäude eignet.

Die Aufgabe wird mit den Merkmalen von Anspruch 1 und 7 gelöst. Auf vorteilhafte Ausgestaltungen nehmen die Unteransprüche Bezug.

Zur Lösung der Aufgabe umfasst ein Bodenbelag eine als Nutzschicht ausgebildete erste Lage und eine weitere Lage, wobei die weitere Lage einen Latentwärmespeicher umfasst. Bodenbeläge sind häufig direkten Sonnenstrahlen ausgesetzt, so dass der Energieeintrag in die Bodenbeläge im Vergleich zu dem Energieeintrag in die angrenzenden Wände größer ist. Dadurch ist der in den Bodenbelag eingebrachte Latentwärmespeicher dort besonders wirksam. Des Weiteren können Bodenbeläge meist verhältnismäßig leicht ausgetauscht werden, so dass die Nachrüstung von Gebäuden mit einem Bodenbelag enthaltend einen Latentwärmespeicher mit einfachen Mitteln möglich ist. Bislang war jedoch problematisch, dass der Bodenbelag durch Lasten, aber auch durch punktförmige Belastung durch Stuhlrollen von Bürostühlen starken Belastungen unterworfen ist. Des Weiteren werden Bodenbeläge während der Herstellung häufig thermischen Belastungen ausgesetzt. Durch den mehrschichtigen Aufbau des Bodenbelags erfolgt eine Funktionstrennung des Bodenbelags in eine lastenaufnehmende und lastenverteilende Nutzschicht und in eine klimawirksame Schicht. Dabei kann die Nutzschicht konventionell, auch unter thermischer Belastung hergestellt und anschließend mit der weiteren Schicht verbunden werden. Des Weiteren verhindert die Nutzschicht, dass in den Latentwärmespeicher eine hohe mechanische Belastung eingetragen wird, die zu einer Zerstörung des Latentwärmespeichers führen könnte.

Die weitere Lage umfasst einen Polyurethan-Schaum, in dessen Matrix der Latentwärmespeicher eingebunden ist. Polyurethane (PU) sind Kunststoffe oder Kunstharze, welche aus der Polyadditionsreaktion von Diolen beziehungsweise Polyolen mit Polyisocyanaten entstehen. Aus Polyurethan lässt sich besonders einfach ein Schaum herstellen, wobei bei der vorliegenden Erfindung insbesondere die Ausbildung als elastischer Schaum bevorzugt ist. Die Flexibilisierung der Schaum-Matrix wird durch Zugabe eines Kettenverlängerers aus der Gruppe der Polyole erreicht. Durch Einmischen des Latentwärmespeichers in eines der flüssigen Ausgangsprodukte des Polyurethans kann dieser sehr gleichmäßig verteilt werden. Nach dem Aushärten des Schaums ist dann der Latentwärmespeicher gleichmäßig und fest in die Matrix des Schaums eingebunden. Durch den elastischen Polyurethan-Schaum, der einen geschäumten Rücken des Bodenbelags bildet, ergibt sich eine vorteilhafte akustische Trittschalldämmung. Dabei wird das Verhältnis aus verhältnismäßig schwerem Latentwärmespeicher und verhältnismäßig leichtem Polyurethan-Schaum so abgestimmt, dass der Bodenbelag ein Trittschallverbesserungsmaß gemäß DIN ISO 140-8 von mehr als 10 dB erreicht. Dabei verbessert sich die Trittschalldämmung je geringer das Raumgewicht des Bodenbelags ist. Dabei ist das Raumgewicht der Nutzschicht durch die Wahl des elastomeren Werkstoffs vorgegeben und kann vorwiegend durch die Materialwahl der weiteren Lage beeinflusst werden. Ein vorteilhaftes Verhältnis aus guter Wärmespeicherwirkung und Trittschalldämmung ergibt sich, wenn das Raumgewicht der weiteren Lage zwischen 300 und 1.000 g/l, bevorzugt zwischen 400 und 800 g/l beträgt.

Der Polyurethan-Schaum enthält Recycling-Material. Hierbei ist vorteilhaft, dass entsorgtes Polyurethan-Material eine weitere stoffliche Verwertung findet.

Dabei wird erfindungsgemäß ein Polyurethan-Schaum verwendet, der in Form von Flocken vorliegt, welche gemeinsam mit dem Latentwärmespeicher mittels eines Binders in der weiteren Lage gebunden sind. Dadurch entsteht ein Verbundschaum, der besonders bevorzugt die Basis der weiteren Lage bildet. Durch die Verwendung von Flocken aus Recycling-Polyurethan sinkt der Bedarf an Primär-Rohstoffen, was die Herstellung eines ressourcenschonenden Bodenbelags erlaubt. Ferner kann als weiteres Recycling-Material Gummi als Gummigranulat oder auch als Gummimehl in dem Verbundschaum enthalten sein.

Bevorzugt enthält der Latentwärmespeicher ein Phasenwechselmaterial. Derartige Materialien weisen je nach Ausgestaltung einen Phasenübergang zwischen fest und flüssig in Umgebungstemperaturbereichen auf. Durch den Phasenübergang werden große Energiemengen aufgenommen oder abgegeben, ohne dass sich die Temperatur des Mediums verändert. Dadurch wirkt ein Latentwärmespeicher in Bezug auf das Klima der Umgebung vergleichmäßigend. Während des Tages wird einfallende Energie aufgenommen, die während der Nacht wieder abgegeben werden kann. Hierbei ist vorteilhaft, dass Klimaanlagen entfallen oder wenigstens mit erheblicher Leistung ausgelegt werden können. Phasenwechselmaterialien können gekapselt werden, so dass sie keinen Alterungsprozessen unterliegen und daher eine hohe Lebensdauer aufweisen.

Das Phasenwechselmaterial des Latentwärmespeichers kann eine oder mehrere lipophile Substanzen aufweisen, wobei der Phasenübergang der Substanzen zwischen fest und Flüssig in einem Temperaturbereich von - 20°C bis 120 °C, vorzugsweise in dem Temperaturbereich von 22°C bis 28°C, liegt. Derartige Medien sind aliphatische Kohlenwasserstoffverbindungen, aromatische Kohlenwasserstoffverbindungen, halogenierte Kohlenwasserstoffe, gesättigte oder ungesättigte Fettsäuren, Fettalkohole, Fettamine, Ester sowie natürliche und synthetische Wachse. Diese Stoffe weisen einen Phasenübergang auf, der in einem in Gebäuden häufig anzutreffenden Temperaturspektrum liegt. Daher sind diese Medien insbesondere für Latentwärmespeicher in einem Bodenbelag geeignet.

In einer vorteilhaften Ausgestaltung ist das Phasenwechselmaterial des Latentwärmespeichers in Form von Kapseln ausgebildet, welche in die weitere Lage eingebunden sind. Die Kapseln bilden eine Hülle und schließen das eigentliche Phasenwechselmaterial ein. Das Material für die Hülle ist vorzugsweise ein polymerer Werkstoff, vorzugsweise ein Polymer basierend auf einer Acrylsäure. Derartige Werkstoffe weisen eine hohe Festigkeit auf, so dass das Phasenwechselmaterial während der Herstellung und der erfindungsgemäßen Nutzung des Bodenbelags nicht austreten kann. Die Kapseln sind vorzugsweise kugelförmig und weisen einen Durchmesser von kleiner als 50 µm, vorzugsweise kleiner als 10 µm auf. Derartige Kapseln dispergieren gut und können dadurch besonders gleichmäßig in dem Bodenbelag verteilt werden. Durch die Formgebung und die Wahl der Kapseln ist der Latentwärmespeicher besonders stabil und für die Anwendung in einem Bodenbelag vorteilhaft geeignet.

Vorzugsweise ist der Binder ein Isocyanat-Binder. Ein vorteilhafter Isocyanat-Binder ist Toluol-2,4-diisocyanat (TDI). Derartige Binder reagieren unter Einfluss von Wasser oder Wasserdampf durch Bildung von Kohlenstoffdioxid schäumend. Dadurch bildet sich ein Schaum, in dessen Matrix die Flocken aus Polyurethan-Schaum und die Latentwärmespeicher-Kapseln eingebunden sind.

Die erste Lage kann aus einem elastomeren Material gebildet sein. Hierbei sind Materialien aus Gummiwerkstoffen, wie beispielsweise Styrol-Butadien-Kautschuk (SBR) und Nitril-Butadien-Kautschuk (NBR) bevorzugt. Bodenbeläge aus elastomeren Materialien weisen neben den vorteilhaften mechanischen Eigenschaften auch eine gute Wärmeleitfähigkeit von etwa 0,5 W/mK auf, so dass sie neben einer Eignung für Fußbodenheizungen auch gut Wärme in Richtung des Latentwärmespeichers leiten können.

Bei dem erfindungsgemäßen Verfahren zur Herstellung eines einen Latentwärmespeicher enthaltenden Bodenbelag, werden zunächst aus Polyurethan-haltigen Recyclingmaterial Flocken bereitgestellt, diese mit dem Latentwärmespeicher vermischt und anschließend mittels eines Binders zu der weiteren Lage geformt werden und die weitere Lage mit der ersten Lage verbunden wird. Hierbei ist insbesondere vorteilhaft, dass Polyurethan-Schaum einer Weiterverwertung zugeführt wird. Durch die gesonderte Herstellung der beiden Lagen des Bodenbelags kann eine Nutzschicht aus einem elastomeren, insbesondere gummibasierenden Material hergestellt werden. Die Herstellung einer Lage aus derartigem Werkstoff erfordert den Einsatz hoher Temperaturen und Drücke. Die Herstellung der weiteren Lage erfolgt unter Einsatz normaler Drücke und geringerer Temperaturerhöhung, beispielsweise durch Einwirkung eines Wasserdampfes. Dadurch ist der Latentwärmespeicher vor der Einwirkung hoher Temperaturen und Drücke geschützt. Beide Lagen werden anschließend mittels eines Klebemittels miteinander verbunden. Bevorzugt ist das Klebemittel insbesondere aus der Gruppe der Hotmelt-Klebstoffe gewählt. In einer weiteren Ausgestaltung werden beide Lagen gemeinsam der Vulkanisation der ersten Lage zugeführt und durch diesen Vulkanisationsprozess stoffschlüssig miteinander verbunden.

### Beispiel

In einem herkömmlichen bekannten Verfahren wird zunächst eine erste Lage 2 hergestellt, welche die Nutzschicht des Bodenbelags 1 bildet. Die erste Lage 2 besteht aus einem elastomeren Werkstoff, hier einem Styrol-Butadien-Kautschuk. Die Dicke der ersten Lage 2 beträgt zwischen 1 mm und 5 mm, vorzugsweise zwischen 2 mm und 3 mm.

Zur Herstellung der weiteren Lage 3 werden zunächst aus Recycling-Material Flocken aus Polyurethan-Schaum bereitgestellt. Der mittlere Durchmesser der Flocken beträgt dabei etwa 1 bis 2 mm. In die Flocken wird der Latentwärmespeicher 4 eingemischt. Der Latentwärmespeicher ist aus Kapseln gebildet, welche mit lipophilen Substanzen gefüllt sind, welche einen Phasenübergang fest/flüssig zwischen 22 und 28°C aufweisen. Der mittlere Durchmesser der Kapseln beträgt 20 µm. Die zuvor beschriebenen Latentwärmespeicher-Kapseln sind unter der Bezeichnung "Micronal" kommerziell von der BASF SE erhältlich.

Der Mischung bestehend aus den Polyurethanschaum-Flocken und den Latentwärmespeicher-Kapseln wird ein Bindemittel, hier Toluol-2,4-diisocyanat (TDI), unter der Bezeichnung Lupranat T80 kommerziell von der BASF SE erhältlich, zugegeben. Anschließend wird die Mischung in einer Block-Form komprimiert und unter Durchleitung von Wasserdampf bei 50 - 250°C zu einem verfestigten Block komprimiert. Aus dem Block werden anschließen im Schälverfahren weitere Lagen 3 gewonnen. Die Dicke der weiteren Lage beträgt dabei zwischen 1 mm und 5 mm, vorzugsweise zwischen 2 mm und 3 mm.

Die so gewonnene weitere Lage 3 enthält Folgende Gewichtsanteile:

| | |
|---|---|
| 94-0 Gew.-%, | vorzugsweise 35 Gew.-% Flocken aus Polyurethan-Schaum; |
| 5-90 Gew.-%, | vorzugsweise 60 Gew.-% Latentwärmespeicher-Kapseln; |
| 1-10 Gew.-%, | vorzugsweise 5 Gew.-% Bindemittel, vorzugsweise Isocyanat-Bindemittel; |

| | |
|---|---|
| 0-30 Gew.-% | recyceltes Gummimaterial. |

Zur Fertigstellung des erfindungsgemäßen Bodenbelags 1 werden die erste Lage 2 und die weitere Lage 3 mittels eines Hotmelt-Klebemittels stoffschlüssig miteinander verbunden.

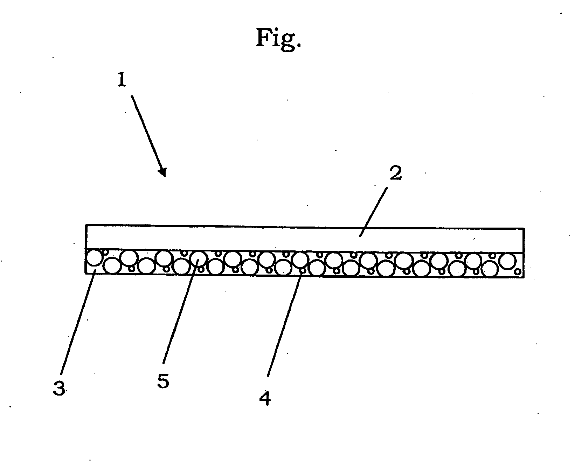

Die Figur zeigt den erfindungsgemäßen Bodenbelag umfassend eine erste als Nutzschicht ausgebildete erste Lage 2 und eine weitere Lage 3, wobei die weitere Lage einen kapselförmigen Latentwärmespeicher 4 auf Basis eines Phasenwechselmaterials umfasst. Die weitere Lage 3 umfasst ferner Flocken 5 aus recyceltem Polyurethan-Schaum, in dessen Matrix der Latentwärmespeicher eingebunden ist.

## Patentansprüche

1. Bodenbelag (1), umfassend eine als Nutzschicht ausgebildete erste Lage (2) und eine weitere Lage (3), wobei die weitere Lage (3) einen Latentwärmespeicher (4) umfasst, wobei die weitere Lage (3) einen Polyurethan-Schaum umfasst, in dessen Matrix der Latentwärmespeicher (4) eingebunden ist, **dadurch gekennzeichnet, dass** der Polyurethan-Schaum Recycling-Material umfasst und dass das Recycling-Material Flocken (5) aus Recycling-Polyurethan-Schaum enthält, welche gemeinsam mit dem Latentwärmespeicher (4) mittels eines Binders in der weiteren Lage gebunden sind.

2. Bodenbelag nach Anspruch 1, **dadurch gekennzeichnet, dass** der Latentwärmespeicher (4) ein Phasenwechselmaterial enthält.

3. Bodenbelag nach Anspruch 2, **dadurch gekennzeichnet, dass** das Phasenwechselmaterial des Latentwärmespeichers (4) eine oder mehrere lipophile Substanzen aufweist, wobei der Phasenübergang der Substanzen zwischen fest und flüssig in einem Temperaturbereich von - 20°C bis 120 °C liegt.

4. Bodenbelag nach Anspruch 2 oder 3, **dadurch gekennzeichnet, dass** das Phasenwechselmaterial des Latentwärmespeichers (4) in Form von Kapseln ausgebildet ist, welche in die weitere Lage (3) eingebunden sind.

5. Bodenbelag nach Anspruch 1, **dadurch gekennzeichnet, dass** der Binder ein Isocyanat-Binder ist.

6. Bodenbelag nach einem der Ansprüche 1 bis 5, **dadurch gekennzeichnet, dass** die erste Lage (2) aus einem elastomeren Material gebildet ist.

7. Verfahren zur Herstellung eines einen Latentwärmespeicher (4) enthaltenden Bodenbelag (1), bei dem zunächst aus Polyurethan-haltigem Recyclingmaterial Flocken (5) bereitgestellt werden, diese mit dem Latentwärmespeicher (4) vermischt und anschließend mittels eines Binders zu einer weiteren Lage (3) geformt werden, eine erste Lage (2) gesondert hergestellt wird und die weitere Lage (3) mit der ersten Lage (2) verbunden wird.

## Claims

1. Floor covering (1), comprising a first layer (2), designed as wear layer, and a further layer (3), the further layer (3) comprising a latent heat storage system (4), the further layer (3) comprising a polyurethane foam in whose matrix the latent heat storage system is incorporated, **characterized in that** the polyurethane foam comprises recycled material and **in that** the recycled material comprises flakes (5) of recycled polyurethane foam which are bound together with the latent heat storage system in the further layer by means of a binder.

2. Floor covering according to Claim 1, **characterized in that** the latent heat storage system (4) comprises a phase change material.

3. Floor covering according to Claim 2, **characterized in that** the phase change material of the latent heat storage system (4) comprises one or more lipophilic substances, the phase transition of the substances between solid and liquid being within a temperature range from -20°C to 120°C.

4. Floor covering according to Claim 2 or 3, **characterized in that** the phase change material of the latent heat storage system (4) is designed in the form of capsules which are incorporated in the further layer (3).

5. Floor covering according to Claim 1, **characterized in that** the binder is an isocyanate binder.

6. Floor covering according to any of Claims 1 to 5, **characterized in that** the first layer (2) is formed from an elastomeric material.

7. Method for producing a floor covering (1) comprising a latent heat storage system, wherein first of all flakes (5) composed of polyurethane-containing recycled material are provided, these flakes are mixed with the latent heat storage system (4) and the mixture is then shaped by means of a binder into a further layer (3), and a first layer (2) is produced separately, and the further layer (3) is joined to the first layer (2).

## Revendications

1. Revêtement de sol (1), comprenant une première couche (2), conçue comme couche utile, et une autre couche (3), l'autre couche (3) comprenant un accumulateur thermique latent (4), l'autre couche (3) comprenant une mousse de polyuréthane dans la matrice de laquelle est intégré l'accumulateur thermique latent, **caractérisé en ce que** la mousse de polyuréthane comprend du matériau recyclé et **en ce que** le matériau recyclé contient des flocons (5) en mousse de polyuréthane recyclé, qui sont intégrés ensemble avec l'accumulateur thermique latent au moyen d'un liant dans l'autre couche.

2. Revêtement de sol selon la revendication 1, **caractérisé en ce que** l'accumulateur thermique latent (4) contient un matériau à changement de phase.

3. Revêtement de sol selon la revendication 2, **caractérisé en ce que** le matériau à changement de phase de l'accumulateur thermique latent (4) présente une ou plusieurs substances lipophiles, la transition de phase des substances entre solide et liquide se situant dans une plage de température de -20°C à 120°C.

4. Revêtement de sol selon la revendication 2 ou 3, **caractérisé en ce que** le matériau à changement de phase de l'accumulateur thermique latent (4) est conçu sous forme de capsules qui sont intégrées dans l'autre couche (3).

5. Revêtement de sol selon la revendication 1, **caractérisé en ce que** le liant est un liant de type isocyanate.

6. Revêtement de sol selon l'une quelconque des revendications 1 à 5, **caractérisé en ce que** la première couche (2) est formée à partir d'un matériau élastomère.

7. Procédé pour la fabrication d'un revêtement de sol (1) contenant un accumulateur thermique latent, dans lequel on prépare d'abord, à partir de matériau recyclé contenant du polyuréthane, des flocons (5), on les mélange avec l'accumulateur thermique latent (4) et on les façonne ensuite au moyen d'un liant en une autre couche (3) et on fabrique, séparément, une première couche (2) et on assemble l'autre couche (3) avec la première couche (2).
